# FASCICULE DE BREVET EUROPEEN

(11) **EP 1 240 697 B1**
(45) Date de publication et mention de la délivrance du brevet: **17.09.2003**
(21) Numéro de dépôt: 00985414.2
(22) Date de dépôt: 06.12.2000
(51) Int. Cl.: H02G 5/10

(54) **SYSTEME DE REFROIDISSEMENT ET DE RECUPERATION DE CHALEUR POUR CIRCUITS ELECTRIQUES HAUTE INTENSITE**
SYSTEM ZUR KÜHLUNE UND RÜCKGEWINNUNG VON WÄRME FÜR ELEKTRISCHE SCHALTUNGEN HOHER INTENSITÄT
SYSTEM FOR COOLING AND RECUPERATING HEAT FOR HIGH INTENSITY ELECTRIC CIRCUITS

(30) Priorité: 06.12.1999 FR 9915311
(43) Date de publication de la demande: 18.09.2002
(73) Titulaire: AMC Sarl, 06530 Saint Cezaire sur Siagne (FR)
(72) Inventeur: PILLET, Michel, F-06530 Saint Cezaire sur Siagne (FR)
(74) Mandataire: Bonneau, Gérard
(86) Numéro de dépôt international: FR0003399
(87) Numéro de publication internationale: WO01043250

(56) Documents cités:
- EP-A- 0 638 666
- US-A- 4 056 449
- US-A- 4 561 955

## Description

### Domaine technique

La présente invention concerne les circuits de refroidissement des circuits électriques haute intensité et particulièrement un dispositif de refroidissement liquide pour les circuits électriques à haute intensité alimentant notamment des cuves à électrolyse.

### Etat de la technique

Les circuits électriques à haute intensité sont utilisés dans des applications telles que les salles d'électrolyse. Ces circuits véhiculent généralement des intensités allant de 10 à 400 kiloampères (kA). Ces circuits à haute intensité dégagent une chaleur importante par effet joule. Il est donc nécessaire de mettre en place des systèmes de refroidissement permettant de dissiper cette chaleur. Ce refroidissement est essentiellement obtenu grâce à des systèmes de refroidissement à air. Cet air peut être l'air ambiant ou de l'air pulsé permettant de créer un courant au niveau de zones d'échange. Le refroidissement naturel dans l'air nécessite d'avoir une densité de courant faible afin de ne. pas dépasser une température des conducteurs supérieure à environ 100°C. En effet, une température trop importante des conducteurs peut être dangereuse, non seulement pour les opérateurs, mais également pour la stabilité thermique du circuit. En effet, l'accroissement de la résistivité des métaux conducteurs avec l'augmentation de température peut conduire à une dégradation irréversible. Cette énergie dégagée sous forme de chaleur transmise à l'air est très pénalisante et difficilement récupérable. Elle génère des coûts de climatisation et de ventilation des locaux très importants avec une possibilité d'entraînement de poussières ou de polluants à l'extérieur.

De plus, les zones d'échange doivent être de dimension importante pour que le refroidissement soit efficace. Ainsi, pour des circuits électriques de haute intensité dégageant de grandes quantités de chaleur, les équipements nécessaires au refroidissement ont des dimensions très importantes qui rendent leur installation difficile et leur encombrement très pénalisant. Un autre inconvénient majeur de ces systèmes de refroidissement à air est qu'ils ne sont pas adaptables à l'intensité du courant utilisée dans le circuit. En effet, si un tel système est prévu pour permettre le refroidissement d'un circuit ayant une intensité particulière, ce système ne sera plus adapté si on augmente l'intensité dans le circuit. Il faut donc prévoir dès la conception du système de refroidissement les éventuelles augmentations d'intensité afin de construire un système qui puisse les absorber.

On a donc prévu pour les circuits électriques à haute intensité qu'au moins une partie du circuit soit réalisée sous forme d'un tube conducteur dans lequel circule un fluide de refroïdissement, tel que décrit dans les documents US 3.067.278 ou GB 465.342. Dans un tel dispositif, le tube refroidi fait partie généralement d'un circuit de circulation du liquide de refroidissement comportant une pompe et un échangeur de chaleur destiné à récupérer la chaleur dégagée dans le tube par le passage du courant électrique.

Dans le cas de l'alimentation de cuves à électrolyse, un autre problème inhérent à ce type d'application doit être surmonté. Il est en effet nécessaire de maintenir l'électrolyte qui se trouve dans les cuves à électrolyse à une température supérieure à une température minimale, sous peine de voir l'électrolyte cristalliser. Ceci nécessite un circuit secondaire permettant de produire la quantité de chaleur nécessaire pour maintenir l'électrolyte à la bonne température. On constate donc généralement, l'existence de circuits électriques à haute intensité disposant d'une part de systèmes de refroidissement permettant de dissiper l'énergie produite (mais ne permettant pas de la récupérer), et d'autre part de systèmes de réchauffage permettant de maintenir l'électrolyte à une température suffisante pour éviter la cristallisation.

Enfin, un autre problème se pose quand plusieurs cuves à électrolyse sont connectées en série et qu'il est nécessaire de déconnecter une de ces cuves. Dans les circuits électriques classiques, il faut impérativement arrêter le fonctionnement des cuves pour pouvoir en déconnecter une. Une fois celle-ci isolée, les autres cuves sont remises en fonction. Cette manipulation est donc très contraignante puisqu'elle nécessite l'immobilisation du dispositif d'électrolyse complet pendant un temps relativement important. Cette immobilisation engendre une perte de production importante et des coûts de redémarrage très élevés pour la société qui utilise ces cuves d'électrolyse.

### Exposé de l'invention

Le but de l'invention est donc de fournir un système de refroidissement liquide permettant d'absorber l'énergie dégagée par le circuit électrique à haute intensité alimentant une cuve à électrolyse et d'utiliser la chaleur récupérée pour réchauffer la cuve et éviter que sa température ne descende au-dessous d'un seuil prédéterminé.

Un autre but de l'invention est de fournir un système de refroidissement liquide d'au moins une partie d'un circuit électrique alimentant plusieurs cuves à électrolyse en série permettant d'isoler rapidement une cuve à électrolyse sans immobiliser les autres cuves.

La présente invention concerne un système de refroidissement d'un circuit électrique haute intensité comprenant un tube en métal conducteur en série et/ou en parallèle dans le circuit électrique, transportant le courant haute intensité et un circuit de circulation de liquide comprenant une pompe à débit variable entretenant une circulation du liquide dans le tube destiné à récupérer la chaleur dégagée par le passage du courant haute intensité dans ce tube et un échangeur de chaleur pour évacuer la chaleur récupérée dans le tube. Le document EP-A-0 638 666 décrit un tel système de refroidissement selon la partie caractérisante de la revendication 1, le circuit électrique haute intensité alimente une cuve à électrolyse comprenant au moins deux électrodes de polarité différente et l'échangeur de chaleur transmet la chaleur récupérée dans le tube à la cuve à électrolyse de façon à ce que la température de la cuve ne descende pas au-dessous d'une température prédéterminée.

Selon une autre caractéristique de l'invention, le circuit électrique haute intensité alimente une pluralité de cuves à électrolyse en série, chacune des cuves à électrolyse étant associée à une portion de tube et à un échangeur de chaleur pour transmettre la chaleur récupérée dans la portion de tube à la cuve à électrolyse de façon à ce que la température de la cuve ne descende pas au-dessous d'une température prédéterminée.

### Description brève des dessins

Les buts, objets et caractéristiques de l'invention sont précisés dans la description qui suit faite en référence aux dessins joints dans lesquels :
- la figure 1 représente une vue de face du dispositif de refroidissement selon l'invention adapté à un circuit électrique à haute intensité alimentant une cuve à électrolyse.
- la figure 2 représente une vue de dessus du dispositif de refroidissement selon l'invention, adapté à un circuit électrique à haute intensité alimentant une cuve à électrolyse, et
- la figure 3 représente un schéma fonctionnel de l'alimentation de plusieurs cuves à électrolyse en série selon les principes de l'invention.

### Description détaillée de l'invention

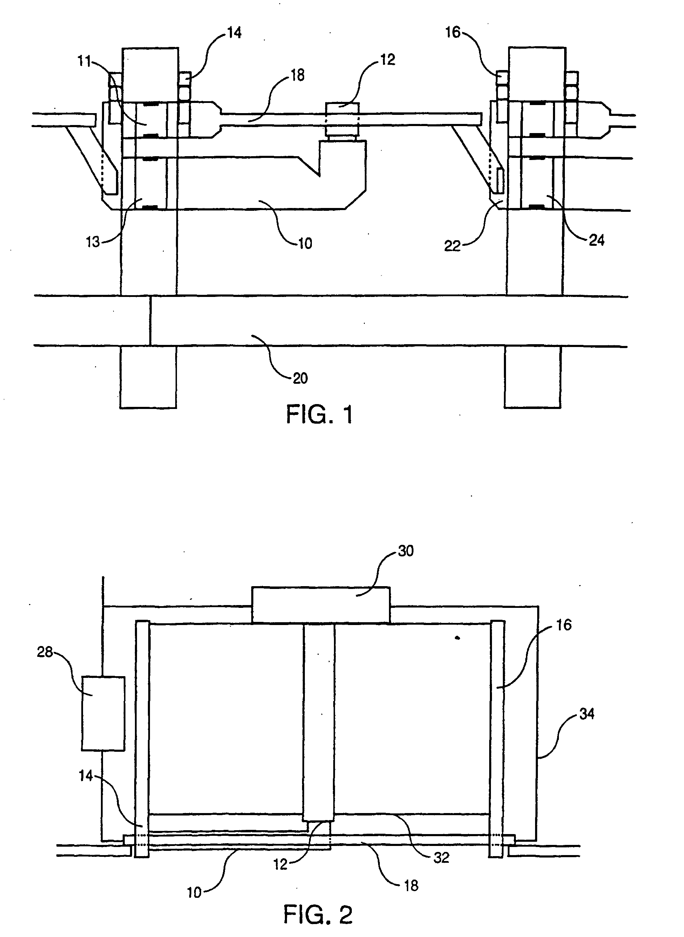

Selon la figure 1, le circuit électrique haute intensité alimente plusieurs cuves à électrolyse en série. Le courant arrive ou repart de la cuve à électrolyse précédente par une barre d'alimentation 10, en métal conducteur qui peut être du cuivre ou de l'aluminium, connectée à l'électrode 12 de la cuve à électrolyse (non représentée). Cette barre d'alimentation est connectée à un sectionneur 13. L'électrode 12 sert donc d'entrée du courant haute intensité. Après son passage dans l'électrolyte, le courant est divisé en deux parties. Une moitié passe dans une électrode 14 et l'autre moitié dans une électrode 16. Ces deux électrodes servent donc de sortie au courant haute intensité. Selon un autre mode de réalisation, le sens de passage du courant dans les électrodes peut être inversé. De même, selon encore d'autres modes de réalisation, la cuve peut disposer d'une seule électrode de sortie ou de plus de deux électrodes de sortie. Le courant qui passe dans l'électrode de sortie 14 rejoint ensuite un tube 18, connecté à cette électrode, appartenant au dispositif de refroidissement selon l'invention. Par exemple, si le courant d'alimentation de la cuve à électrolyse est de 50 kA, à la sortie de celle-ci, 25 kA passent dans l'électrode de sortie 14 et le tube de refroidissement 18 et 25 kA passent dans l'électrode de sortie 16. Le tube 18 est en métal conducteur. Selon un mode réalisation préférentiel, le métal utilisé est le cuivre ou l'aluminium. Ce tube sert également de canalisation pour la circulation du liquide permettant ainsi le refroidissement du circuit électrique à haute intensité. Le liquide utilisé peut être de l'eau avec ou sans additifs, de l'huile ou du glycol. Le raccordement du tube au circuit de refroidissement est détaillé sur la figure 2. La fraction de courant qui passe dans le tube 18 rejoint celle qui passe dans l'électrode de sortie 16 au niveau d'une barre d'alimentation 22. Cette barre permet le passage du courant à la cuve d'électrolyse suivante par l'intermédiaire d'un sectionneur 24. Ainsi, 50 kA vont alimenter la cuve suivante. Le courant revient par la barre d'alimentation 20.

Lorsque la cuve à électrolyse doit être court-circuitée pour subir par exemple une opération de maintenance, il suffit de fermer l'interrupteur 11 et d'ouvrir le sectionneur 13. La barre d'alimentation 10 n'est donc plus alimentée et par conséquent la cuve à électrolyse non plus. Le courant provenant de la cuve précédente passe directement et en totalité dans le tube 18 et alimente la cuve suivante, via le sectionneur 24. Ainsi, dans cette configuration les 50 kA passent dans le tube 18. L'opération de court-circuitage d'une cuve à électrolyse se fait donc beaucoup plus aisément et ne nécessite pas l'immobilisation du dispositif d'électrolyse complet.

Selon la figure 2, le tube de refroidissement 18 est relié à un circuit de refroidissement comportant une pompe 28 permettant de faire circuler le liquide de refroidissement, un échangeur 30 permettant de transmettre l'énergie, récupérée dans le tube de refroidissement 18 sous forme de chaleur, au bain de la cuve à électrolyse 32. Ces différents composants du circuit de refroidissement sont reliés entre eux par des tuyaux isolants souples ou rigides 34. Le liquide arrive au niveau de la pompe 28 et rejoint le tube de refroidissement 18. A ce niveau, le liquide a une température t₁.

Au fur et à mesure que le liquide circule dans le tube de refroidissement, sa température augmente jusqu'à atteindre une température t₂ Ce réchauffement est dû à la transmission au liquide de la chaleur dégagée par le courant haute intensité qui passe dans le tube de refroidissement et qui provient de l'électrode de sortie 14. Lorsque la cuve à électrolyse est en fonctionnement, l'intensité du courant transmis au tube de refroidissement est égale à 50 % de l'intensité du courant transmis à la cuve 32 par l'électrode d'entrée 12, connectée à la barre d'alimentation 10. Les 50 % restant sont véhiculés par la deuxième électrode de sortie 16. L'énergie récupérée par le liquide sous forme de chaleur correspond donc dans ce cas à l'énergie dégagée par 50 % du courant haute intensité. Si la cuve est court-circuitée, la totalité du courant est transmise au tube de refroidissement. Celui-ci est alors capable d'absorber l'énergie dégagée par la totalité du courant. En effet, même si l'intensité du courant passant dans le tube de refroidissement peut varier du simple au double, il est facile d'assurer une température constante du liquide en faisant simplement varier son débit dans le circuit de refroidissement. En fait, il n'est même pas nécessaire de faire varier le débit dans le circuit de refroidissement, la variation de température du liquide étant minime même dans le cas où la cuve est court-circuitée.

Par exemple, si le tube de refroidissement est constitué par un tube de cuivre d'une surface totale de 8200 mm², lorsque la cuve est fonctionnement, un courant d'une intensité égale à 25 kA dont la densité est de 6 A/mm², permet de produire 1,3 kW/m de tube. L'augmentation de température correspondante de l'eau, utilisée comme liquide de refroidissement, est de 2,3°C par mètre de tube, pour un débit d'eau de 0,5 m³/h. Lorsque la cuve est court-circuitée, l'intensité du courant est de 50 kA. Pour une même densité de courant et un même débit d'eau, le circuit produit 5,2 kW/m, soit une augmentation de température d'environ 9°C.

Le liquide qui arrive à l'échangeur 30 a donc subi une augmentation de température variant selon que la cuve est branchée ou est court-circuitée. L'échangeur permet le transfert de l'énergie correspondant à l'augmentation de température du liquide vers le bain d'électrolyse. En effet, le bain d'électrolyse a besoin d'être maintenu à une température minimale, par exemple 40°C, afin d'éviter que l'électrolyte ne cristallise. Cette énergie de chauffage peut représenter jusqu'à 10 % de l'énergie totale. Lorsque la cuve est en fonctionnement, une partie de cette énergie est apportée par l'électrolyse elle-même. L'autre partie est apportée grâce à la chaleur récupérée par le circuit de refroidissement. Lorsque la cuve est court-circuitée, il est nécessaire de maintenir l'électrolyte à la même température. Cependant, on ne dispose plus de l'énergie dégagée par l'électrolyse. L'énergie est donc apportée en intégralité par le circuit de refroidissement. Le circuit de court-circuitage a une longueur de 4 mètres alors que le circuit d'alimentation de la cuve a une longueur de 8 mètres. Ainsi, lors du court-circuitage de la cuve, l'énergie globalement produite dans le tube de refroidissement est le double de la normale et compense donc l'absence d'énergie d'électrolyse pour maintenir l'électrolyte à la température voulue.

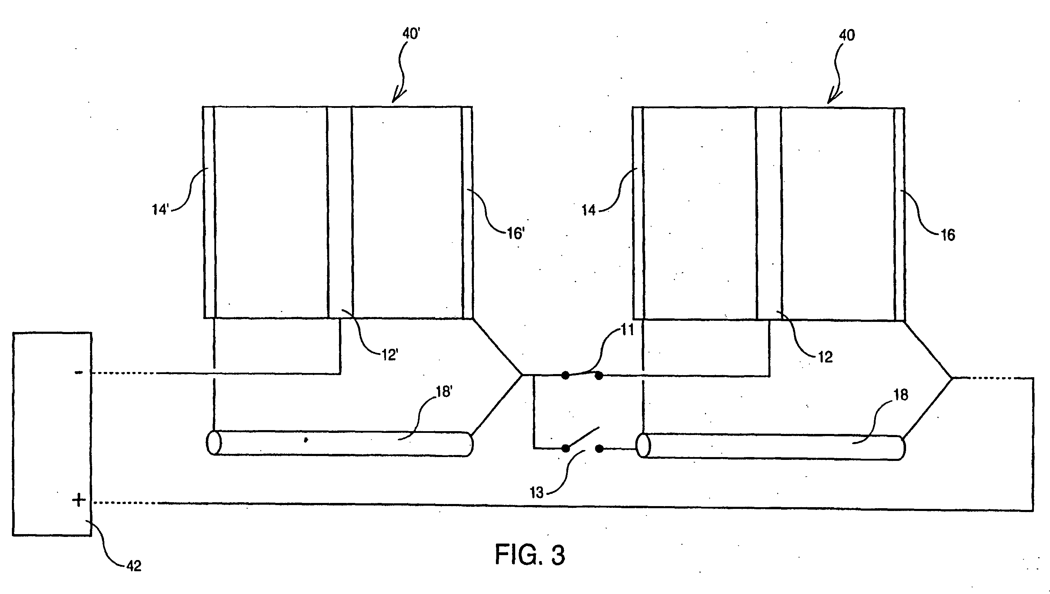

Dans l'exemple de réalisation illustrée sur la figure 3, deux cuves à électrolyse 40 et 40' sont alimentées en série par un courant de 50KA fourni par la source de courant 42. Pour chaque cuve, le courant alimente le bain par deux anodes 14 et 16 (14' et 16' pour l'autre cuve) fournissant une intensité de 25 kA chacune. Un courant de sortie de 50 KA est donc fourni par la cathode de la cuve. En fonctionnement normal, le courant de 50 KA sortant de la cathode 12 alimente, grâce à l'interrupteur 11 fermé, l'anode 16' et le tube de refroidissement 18' de la cuve à électrolyse 40' en fournissant à l'une et à l'autre un courant de 25 KA. L'autre extrémité du tube de refroidissement 18 est connecté directement à l'anode 14' de la cuve 40'.

Si, pour une raison quelconque (maintenance en particulier), la cuve 40 doit être court-circuitée, on ouvre l'interrupteur 12 et on ferme le sectionneur 13 (alors qu'en fonctionnement normal, ce sectionneur est ouvert). De la sorte, aucun courant ne passe dans la cuve à électrolyse 40, et un courant de 50 KA passe donc dans le tube de refroidissement 18.

On notera que dans l'exemple illustré sur la figure 3, la cuve à électrolyse 40 est la première de la chaîne et, de ce fait, l'anode 16 et le tube de refroidissement 18 ne sont pas alimentés par l'intermédiaire d'un interrupteur ou d'un sectionneur.

Dans un autre mode de réalisation, le tube de refroidissement peut être mis en contact avec la barre d'alimentation du circuit électrique haute intensité afin de la refroidir. Le tube de refroidissement est alors connecté en parallèle avec la barre d'alimentation, dans le circuit haute intensité. Une partie du courant haute intensité passant normalement dans cette barre, est transmise dans le tube de refroidissement. L'énergie qui se dégage dans la barre d'alimentation est donc moins importante. De plus, cette énergie est transférée au liquide circulant dans le tube de refroidissement. L'énergie produite par la fraction de courant passant dans le tube de refroidissement est également transférée au liquide circulant dans ce tube. Cette adaptation permet donc d'augmenter la capacité électrique de la barre d'alimentation et de diminuer sa température tout en permettant la récupération de l'énergie produite au niveau de cette barre. Ce système s'adapte notamment aux circuits électriques haute intensité refroidis par un système de refroidissement à air classique. En effet, lorsque le refroidissement n'est plus optimal et qu'il est nécessaire de remplacer le système de refroidissement, l'adaptation du système de refroidissement liquide selon l'invention pour compenser cette faiblesse apparaît comme une solution beaucoup moins coûteuse.

Bien que le système de refroidissement selon l'invention soit appliqué, dans les exemples, à un circuit électrique haute intensité de 50 kA, ce système s'applique plus généralement à des circuits électriques dont l'intensité va de 10 à 400 kA.

Dans le cas d'un système de refroidissement à air classique, les barres de refroidissement devraient avoir une surface suffisante pour pouvoir dissiper l'énergie dégagée par le courant dont l'intensité est maximale lorsque la cuve est court-circuitée, même si l'opération de court-circuitage ne dure que quelques heures par an. De plus, la densité de courant dans les barres de refroidissement est limitée. En effet, dans des barres en aluminium, la densité est d'environ 0,5 A/mm². La surface de refroidissement est donc de 100 000 mm² pour un courant de 50 kA, soit environ 300 kg/m de conducteur. Une telle installation est donc fort coûteuse. Un tel investissement est très peu rentable puisqu'une installation de ce type est utilisée à sa pleine mesure que très rarement, lorsque la cuve d'électrolyse est court-circuitée.

Le dispositif selon l'invention permet donc de diminuer fortement les coûts de fabrication et d'installation du système de refroidissement du circuit électrique. Il permet également, en utilisant un tube de refroidissement représentant une portion importante du circuit électrique, de fortement diminuer son encombrement. De plus, il permet de court-circuiter facilement une cuve à électrolyse. Enfin, ce dispositif permet surtout de recycler l'énergie produite par le circuit électrique à haute intensité afin d'alimenter une cuve à électrolyse et notamment de maintenir le bain de la cuve à électrolyse à une température voulue, évitant ainsi la cristallisation de l'électrolyte contenu dans le bain.

## Revendications

1. Système de refroidissement d'un circuit électrique haute intensité comprenant un tube en métal conducteur (18), en série et/ou en parallèle dans ledit circuit électrique, transportant le courant haute intensité et un circuit de circulation de liquide comprenant une pompe à débit variable (28) entretenant une circulation de liquide dans ledit tube destiné à récupérer la chaleur dégagée par le passage du courant haute intensité dans ledit tube et un échangeur de chaleur pour évacuer la chaleur (30) récupérée dans ledit tube,
ledit système étant **caractérisé en ce que** ledit circuit électrique haute intensité alimente une cuve à électrolyse (40) comprenant au moins deux électrodes (12, 14, 16) de polarités différentes et ledit échangeur de chaleur transmet la chaleur récupérée dans ledit tube à ladite cuve à électrolyse de façon à ce que la température de ladite cuve ne descende pas au-dessous d'une température prédéterminée.

2. Système de refroidissement selon la revendication 1, dans lequel ladite cuve à électrolyse (40) comprend une électrode (12) d'une première polarité qui sert d'entrée ou (de sortie) audit courant haute intensité et deux autres électrodes (14, 16) qui servent de sortie (ou d'entrée) audit courant haute intensité, ledit tube (18) étant connecté à une desdites électrodes de sortie et transportant un courant dont l'intensité est égale à la moitié de l'intensité dudit courant haute intensité.

3. Système de refroidissement d'un circuit électrique haute intensité, comprenant un tube en métal conducteur (18), en série et/ou en parallèle dans ledit circuit électrique, transportant le courant haute intensité et un circuit de circulation de liquide comprenant une pompe à débit variable (28) entretenant une circulation de liquide dans ledit tube destiné à récupérer la chaleur dégagée par le passage du courant haute intensité dans ledit tube et un échangeur de chaleur pour évacuer la chaleur (30) récupérée dans ledit tube,
ledit système étant **caractérisé en ce que** ledit circuit électrique haute intensité alimente une pluralité de cuves à électrolyse (40, 40') en série, chacune desdites cuves à électrolyse étant associée à une portion de tube et à un échangeur de chaleur pour transmettre la chaleur récupérée dans ladite portion de tube à ladite cuve à électrolyse de façon à ce que la température de ladite cuve ne descende pas au-dessous d'une température prédéterminée.

4. Système de refroidissement selon la revendication 3, dans lequel chacune desdites cuves à électrolyse (40, 40') comprend une électrode (12) d'une première polarité qui sert d'entrée ou (de sortie) audit courant haute intensité et deux autres électrodes (14, 16) d'une seconde pluralité qui servent de sortie (ou d'entrée) audit courant haute intensité, ledit tube (18) étant connecté à une desdites électrodes de sortie et transportant un courant dont l'intensité est égale à la moitié de l'intensité dudit courant haute intensité.

5. Système de refroidissement selon la revendication 4, comprenant en outre des moyens de commutation (11, 13) entre une première et une deuxième cuves à électrolyse (40, 40') adaptés pour déconnecter dudit circuit électrique ladite électrode d'une première polarité de ladite deuxième cuve (40) et connecter lesdites électrodes d'une seconde polarité de ladite première cuve (40') à la portion de tube (18) associée à ladite seconde cuve de manière à court-circuiter ladite deuxième cuve et à ce que ladite portion de tube associée à ladite seconde cuve transporte la totalité du courant haute intensité.

6. Système selon l'une des revendications 2, 4 ou 5, dans lequel ladite électrode (12 ou 12') d'entrée (ou de sortie) est connectée à une barre d'alimentation (10) en aluminium ou en cuivre.

7. Système de refroidissement selon l'une des revendications précédentes, dans lequel le liquide utilisé dans ledit circuit de circulation de liquide est de l'eau avec ou sans additifs, de l'huile ou du glycol.

8. Système de refroidissement selon l'une des revendications précédentes, dans lequel le métal conducteur constituant le tube est du cuivre ou de l'aluminium.

## Patentansprüche

1. System zum Kühlen eines elektrischen Starkstromkreises, umfassend ein Rohr (18) aus leitendem Metall, das in diesem Stromkreis in Reihe und/oder parallel geschaltet ist und den Starkstrom befördert, und einen Flüssigkeitsumlaufkreis, der eine Pumpe (28) mit veränderlichem Durchsatz, die einen Flüssigkeitsumlauf in diesem Rohr aufrecht erhält, das dazu bestimmt ist, die durch den Durchgang des Starkstroms in dem Rohr freigesetzte Wärme aufzunehmen, und einen Wärmetauscher (30) zum Abführen der in dem Rohr aufgenommenen Wärme umfaßt,
wobei dieses System **dadurch gekennzeichnet ist, daß** der elektrische Starkstromkreis eine Elektrolysewanne (40) versorgt, die mindestens zwei Elektroden (12, 14, 16) mit verschiedenen Polaritäten umfaßt, und der Wärmetauscher die in dem Rohr aufgenommene Wärme auf die Elektrolysewanne überträgt, so daß die Temperatur der Wanne eine vorbestimmte Temperatur nicht unterschreitet.

2. Kühlsystem nach Anspruch 1, bei dem die Elektrolysewanne (40) eine Elektrode (12) mit einer ersten Polarität aufweist, die als Eingang (oder Ausgang) für den Starkstrom dient, und zwei weitere Elektroden (14, 16), die als Ausgang (oder Eingang) für den Starkstrom dienen, wobei das Rohr (18) mit einer der Ausgangselektroden verbunden ist und einen Strom befördert, dessen Stärke gleich der Hälfte der Stärke des Starkstroms ist.

3. System zum Kühlen eines Starkstromkreises, umfassend ein Rohr (18) aus leitendem Metall, das in diesem Stromkreis in Reihe und/oder parallel geschaltet ist und den Starkstrom befördert, und einen Flüssigkeitsumlaufkreis, der eine Pumpe (28) mit veränderlichem Durchsatz, die einen Flüssigkeitsumlauf in diesem Rohr aufrecht erhält, das dazu bestimmt ist, die durch den Durchgang des Starkstroms in dem Rohr freigesetzte Wärme aufzunehmen, und einen Wärmetauscher (30) zum Abführen der in dem Rohr aufgenommenen Wärme umfaßt,
wobei dieses System **dadurch gekennzeichnet ist, daß** der Starkstromkreis eine Vielzahl von in Reihe geschalteten Elektrolysewannen (40, 40') versorgt, deren jeder ein Rohrabschnitt und ein Wärmetauscher zugeordnet ist, um die in diesem Rohrabschnitt aufgenommene Wärme auf die Elektrolysewanne zu übertragen, so daß die Temperatur der Wanne eine vorbestimmte Temperatur nicht unterschreitet.

4. Kühlsystem nach Anspruch 3, bei dem jede der Elektrolysewannen (40, 40') eine Elektrode (12) mit einer ersten Polarität, die als Eingang (oder Ausgang) für den Starkstrom dient, und zwei weitere Elektroden (14, 16) mit einer zweiten Polarität aufweist, die als Ausgang (oder Eingang) für den Starkstrom dienen, wobei das Rohr (18) mit einer der Ausgangselektroden verbunden ist und einen Strom befördert, dessen Stärke gleich der Hälfte der Stärke des Starkstroms ist.

5. Kühlsystem nach Anspruch 4, umfassend außerdem Schaltmittel (11, 13) zwischen einer ersten und einer zweiten Elektrolysewanne (40, 40'), die dafür ausgelegt sind, die eine erste Polarität aufweisende Elektrode der zweiten Wanne (40) von dem Stromkreis zu trennen und die eine zweite Polarität aufweisenden Elektroden der ersten Wanne (40') mit dem der zweiten Wanne zugeordneten Rohrabschnitt (18) zu verbinden, so daß die zweite Wanne kurzgeschlossen wird und der der zweiten Wanne zugeordnete Rohrabschnitt den gesamten Starkstrom befördert.

6. System nach einem der Ansprüche 2, 4 oder 5, bei dem die Eingangs- (oder Ausgangs-)Elektrode (12 oder 12') an eine Versorgungsschiene (10) aus Aluminium oder aus Kupfer angeschlossen ist.

7. Kühlsystem nach einem der vorhergehenden Ansprüche, bei dem die in dem Flüssigkeitsumlaufkreis verwendete Flüssigkeit Wasser mit oder ohne Zusätze, Öl oder Glykol ist.

8. Kühlsystem nach einem der vorhergehenden Ansprüche, bei dem das das Rohr bildende leitende Metall Kupfer oder Aluminium ist.

## Claims

1. A cooling system for a high intensity electric circuit featuring a conductive metal tube (18), in series and/or parallel in said electric circuit, transporting the high intensity current and a liquid circulating system featuring a pump with variable flow rate (28) which circulates the liquid in said tube designed to recover the heat released by the high intensity current passing through said tube and a heat exchanger to dissipate the heat (30) recovered in said tube.
said system being **characterised in that** said high intensity electric circuit supplies an electrolysis vessel (40) featuring at least two electrodes (12, 14, 16) of different polarity and said heat exchanger transmits the heat recovered in said tube to said electrolysis vessel so that the temperature of said vessel does not drop below a predetermined temperature.

2. The cooling system according to claim 1, in which said electrolysis vessel (40) includes an electrode (12) of an initial polarity which serves as input (or output) to said high intensity current and two other electrodes (14, 16) which are used as an output (or input) to said high intensity current, said tube (18) being connected to one of said output electrodes and conveying a current whose intensity is equal to half of the intensity of said high intensity current.

3. A cooling system for a high intensity electric circuit featuring a conductive metal tube (18), in series and/or parallel in said electric circuit, transporting the high intensity current and a liquid circulating system featuring a pump of variable flow rate (28) which circulates the liquid in said tube designed to recover the heat released by the high intensity current passing through said tube and a heat exchanger to dissipate the heat (30) recovered in said tube,
said system being **characterised in that** said high intensity electric circuit supplies a plurality of electrolysis vessels (40, 40') in series, each of the electrolysis vessels being associated with a length of tube and to a heat exchanger to convey the heat recovered in said length of tube to said electrolysis vessel so that the temperature of said vessel does not drop below a predetermined temperature.

4. The cooling system according to claim 3, in which each of said electrolysis vessels (40, 40') includes an electrode (12) with a first polarity which serves as input (or output) to said high intensity current and two other electrodes (14, 16) with a second polarity which are used as an output (or input) to said high intensity current, said tube (18) being connected to one of said output electrodes and conveying a current whose intensity is equal to half of the intensity of said high intensity current.

5. The cooling system according to claim 4, also featuring communication means (11, 13) between the first and second electrolysis vessels (40, 40') adapted for disconnecting from said electric circuit said electrode of the first polarity of said second vessel (40) and for connecting said electrodes of a second polarity of said first vessel (40') to the length of tube (18) associated with said second vessel so as to short-circuit said second vessel and so that said length of tube associated with said second vessel conveys the totality of the high intensity current.

6. The system according to any one of claims 2, 4 or 5, in which said input (or output) electrode (12 or 12') is connected to an aluminium or copper supply bar (10).

7. The cooling system according to any one of the previous claims in which the liquid used in said liquid circulation circuit is water with or without additives, oil or glycol.

8. The cooling system according to any one of the previous claims, in which the conductive metal of which the tube is made is copper or aluminium.
